# EUROPEAN PATENT APPLICATION

(11) **EP 4 373 162 A1**
(43) Date of publication of application: **22.05.2024**
(21) Application number: 22208090.5
(22) Date of filing: 17.11.2022
(51) Int. Cl.: H04W 40/02, H04W 40/22, H04W 40/24, H04W 74/00

(54) **LINK NEGOTIATION PROCEDURE FOR WIRELESS NETWORK**

(71) Applicant: Telenor Maritime Oy, 90590 Oulu (FI)
(72) Inventor: Heinikangas, Marko, 90590 Oulu (FI); Kantola, Kalle, 90590 Oulu (FI); Laitala, Jussi, 90590 Oulu (FI); Lukkari, Markku, 90590 Oulu (FI)
(74) Representative: Kolster Oy Ab

(57) **Abstract**

This document discloses a solution for a link negotiation procedure in a wireless network. According to an aspect, the solution comprises in a first node (100) of a wireless network: determining (300) that a target node of the wireless network is not reachable with a point-to-point transmission; transmitting (302) broadcast transmission requesting a relay connection to the target node; receiving (304) on a given frequency a response from a second node of the wireless network, the response indicating capability to relay transmissions to the target node; transmitting (306) data to the second node, the being data intended to the target node and receiving (308) an acknowledgement from the second node that the data has been successfully transmitted to the target node.

## Description

### Field

The invention relates to the field of radio communications and, particularly, to carrying out a link negotiation procedure in a radio network.

### Background

Many modern radio communication networks support communication between the nodes of the network without any central node or a base station. Nodes may transmit messages directly to each other utilising some agreed channel or frequency reservation procedure.

As nodes may be located far away from each other or in locations where propagation is limited, it may be that direct communication between all nodes is not possible. An efficient solution for enabling communication between nodes is needed.

### Brief description

The following presents a simplified summary of the invention in order to provide a basic understanding of some aspects of the invention. This summary is not an extensive overview of the invention. It is not intended to identify key/critical elements of the invention or to delineate the scope of the invention. Its sole purpose is to present some concepts of the invention in a simplified form as a prelude to a more detailed description that is presented later.

According to an aspect of the present invention, there is provided a method for link negotiation procedure for nodes of a wireless network, the method comprising in a first node of a wireless network: determining that a target node of the wireless network is not reachable with a point-to-point transmission; transmitting broadcast transmission requesting a relay connection to the target node; receiving on a given frequency a response from a second node of the wireless network, the response indicating capability to relay transmissions to the target node; transmitting data to the second node, the being data intended to the target node; receiving an acknowledgement from the second node that the data has been successfully transmitted to the target node.

According to an aspect of the present invention, there is provided an apparatus in a wireless communication system, the apparatus comprising means for determining that a target node of the wireless network is not reachable with a point-to-point transmission; means for transmitting broadcast transmission requesting a relay connection to the target node; means for receiving on a given frequency a response from a second node of the wireless network, the response indicating capability to relay transmissions to the target node; means for transmitting data to the second node, the being data intended to the target node; means for receiving an acknowledgement from the second node that the data has been successfully transmitted to the target node.

In an embodiment, the broadcast transmission comprises information on the given frequency or frequencies to send a response to the broadcast transmission.

In an embodiment, the apparatus further comprises means for receiving a response from more than one second nodes in the of the wireless network, the responses indicating capability to relay transmissions to the target node and means for selecting one of the second nodes as the node to which data intended to the target node is transmitted.

In an embodiment, responses from more than one second nodes are separated in time on the same frequency.

In an embodiment, the apparatus further comprises responses from more than one second nodes are received on different frequencies.

In an embodiment, the apparatus further comprises means for selecting as the node to which data intended to the target node is transmitted the node which response was received first.

In an embodiment, the apparatus further comprises means for rejecting a response from a node with which data transmission has been unsuccessful prior transmitting the broadcast request.

### List of drawings

Embodiments of the present invention are described below, by way of example only, with reference to the accompanying drawings, in which
Figures 1 and 2 illustrate wireless networks to which embodiments of invention may be applied;
Figure 3 is a flow chart illustrating an embodiment;
Figures 4, 5, 6 and 7 are signalling charts illustrating some embodiments;
Figures 8A and 8B illustrate embodiments of messages;
Figure 9 illustrates a block diagram of a structure of an apparatus according to an embodiment of the invention.

### Description of embodiments

The following embodiments are exemplary. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned.

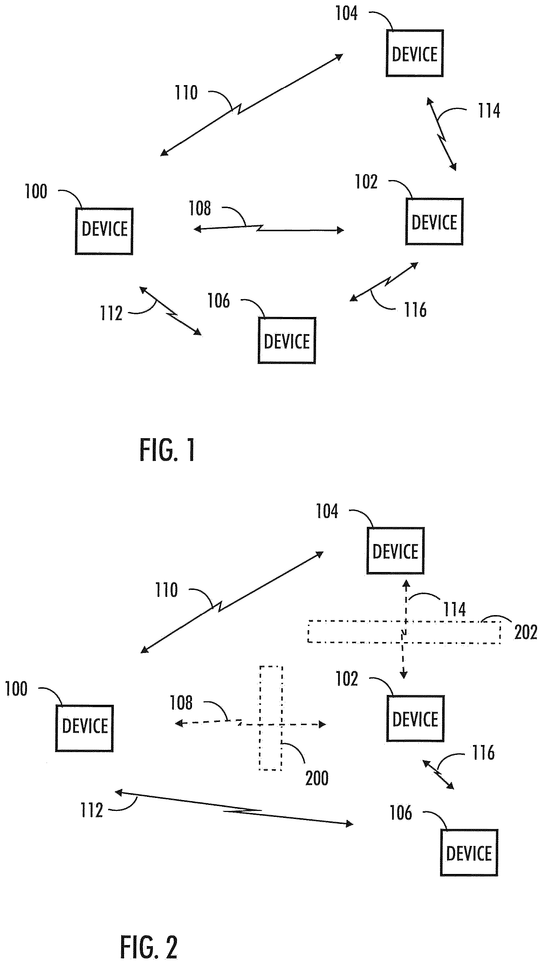

Figure 1 illustrates an exemplary wireless telecommunication system to which embodiments of the invention may be applied. Embodiments of the invention may be realized in an ad hoc network comprising a plurality of network nodes 100, 102, 104, 106 that may be realized by radio communication apparatuses. The ad hoc network may refer to a network that is established between the network nodes 100 to 106 without any network planning with respect to the infrastructure and/or frequency utilization. The network nodes may be operationally equivalent to each other although in some embodiments some of the network nodes of the system may operate as access nodes to other network nodes. The term access node may refer to a network access service provided by an access node, wherein the access node provides another network node with radio access to at least one network, e.g. a local area network, a wide area network, and/or the Internet. At least some of the network nodes may be free to move, and they may also be configured to route data packets that are unrelated to their own use, e.g. data packets of other network nodes. However, it should be understood that principles of the invention may be applied to other types of communication systems, e.g. wireless mesh networks, communication systems having a fixed infrastructure such as cellular communication systems, and other types of systems.

In the embodiment of Figure 1, the network nodes 100 to 106 have a very long communication range (even thousands of kilometres), and they may communicate directly with network nodes on the other side of the Earth. Their transmit powers may vary from a few Watts (e.g. 20 to 50 W) to even kilo Watts, depending on whether the network node is mobile or fixed and the type of power supply. For example, a network node installed to a building, a truck, or a ship may utilize high transmit powers, while a hand-held device may be limited to a few Watts. The frequency band utilized by the network nodes 10 to 12 may comprise a high frequency (HF) band (3 to 30 MHz or 1.5 to 30 MHz), but it should be understood that other embodiments utilize other frequency bands supporting such long-range radio links, e.g. very high frequencies (VHF) or ultra-high frequencies (UHF). An advantage of HF frequencies is their long propagation range, and the fact that they may propagate via several types of communication paths. However, embodiments of the invention are as well applicable to shorter distances, with line-of-sight connections.

In an embodiment, the network nodes 100 to 106 are configured to support communication on a high frequency band from which actual transmission frequencies may be selected. The supported frequency band may be continuous or divided into a plurality of frequency bands separated from each other. The division may be based on the fact that there are other systems occupying some frequencies that may have a priority to occupy the frequencies, while the present system has to adapt to the frequency occupation of such a primary system. In some embodiments, the systems occupying the same frequency band have equal priority to the frequency occupation, and at least the present system may utilize cognitive channel selection procedures to avoid collisions between the systems.

The nodes 100 to 106 may communicate 108-116 point-to-point with each other without any base station.

In an embodiment, the nodes 100 to 106 in the network periodically broadcast frequency messages, FM, to build node availability information. Broadcast may be defined as a transmission not directed to any particular recipient. Link negotiation for point-to-point communication between nodes may be performed is done using a request-to-send/clear-to-send, RTS/CTS, handshake. A node is always listening for RTS messages in wide-band mode and thus does not need to know the specific frequency with which it will be transmitted. A node transmitting an RTS is listening for the CTS messages in narrow-band mode after receiving the RTS message and thus needs to know the specific frequency with which it will be transmitted. A node transmitting an RTS may specify the CTS transmission frequency in the RTS message. After the link is successfully negotiated, data may be transmitted using automatic repeat request, ARQ, protocol, for example. A receiver specifies the desired ARQ data transmission parameters in the CTS message, including the frequency with which it will receive data. The sender specifies ACK channel transmission parameters in the RTS message.

In the ARQ protocol, data session consists of ACK blocks which consists of data fragments.

In an embodiment, the high frequency range is divided in blocks. When transmitting an FM, general noise level of the block may be added to the message. Also general free/busy information about each frequency in the block may be added to the message. Received frequency messages expire after a given number of minutes from reception.

An example of a link negotiation procedure for point-to-point transmission between nodes is as follows. Typically best N frequency blocks from the received FM:s (sent by the receiver node) are selected first using the block noise information and measured signal quality, where N is a system parameter. Transmission frequency block is selected from the best by random chance weighted by the measured signal quality. Then within that block a frequency is selected according to following: First, select a random frequency that is defined free in the FM free / busy information and that is also measured as being free in the senders side. However, if no frequency is free in sender's side, select random free frequency from the receiver's side. Further, if no frequency is free in the receiver's side, use the frequency with which the most recent FM was transmitted on.

There may occur situations where a node may be unreachable by another node. This may be due to obstructions between the nodes, for example. Figure 2 illustrates an example, where transmissions of a first node 100 cannot reach a target node 102 due to an obstruction 200. Likewise, node 104 cannot transmit to the node 102, due to an obstruction 202. The obstructions may be physical obstructions or related to propagation properties of the radio path between the nodes, for example.

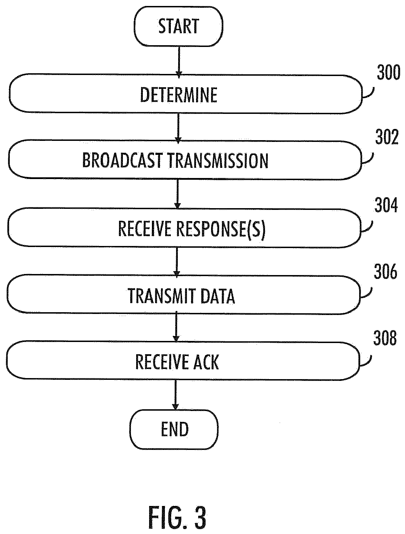

Figure 3 is a flowchart illustrating an embodiment for link negotiation procedure for nodes of a wireless network. The chart illustrates an example of the operation of the first node 100 or a part of the first node.

In step 300, the first node is configured to determine that a target node of the wireless network is not reachable with a point-to-point transmission.

In step 302, the first node is configured to transmit broadcast transmission requesting a relay connection to the target node. In an embodiment, the broadcast transmission comprises information on a given frequency or frequencies to send a response to the first node. In an embodiment, the transmission is a request-to-send, RTS, message.

In step 304, the first node is configured to receive on the given frequency a response from a second node in the of the wireless network, the response indicating capability to relay transmissions to the target node. In an embodiment, the response is a clear-to-send, CTS, message.

In an embodiment, if the first node receives a response from more than one second nodes in the of the wireless network, the responses indicating capability to relay transmissions to the target node, the first node may select one of the second nodes as the node to which data intended to the target node is transmitted.

In an embodiment, the first node is configured to select as a relay node the second node whose CTS message is received first. If there was a prior failed data transmission to the target node via this second node, the first node may skip the CTS message and wait for CTS messages from other nodes. The node may be skipped a given N number of times on further RTS retries (if no other node responds) before choosing it again.

In step 306, the first node is configured to transmit data to the second node, the being intended to the target node.

In step 308, the first node is configured to receive an acknowledgement from the second node that the data has been successfully transmitted to the target node.

Thus, if the first node is unable to transmit to the target node a point-to-point manner, the first node may try to negotiate a multihop link, where there is a relaying node between the first node and the target node.

In an embodiment, the nodes receiving the broadcast RTS may first determine whether they are allowed to act as a relaying node. If the properties of the node are such that it may not act as a relying node, it may refrain from responding with a CTS even if it could communicate with the target node.

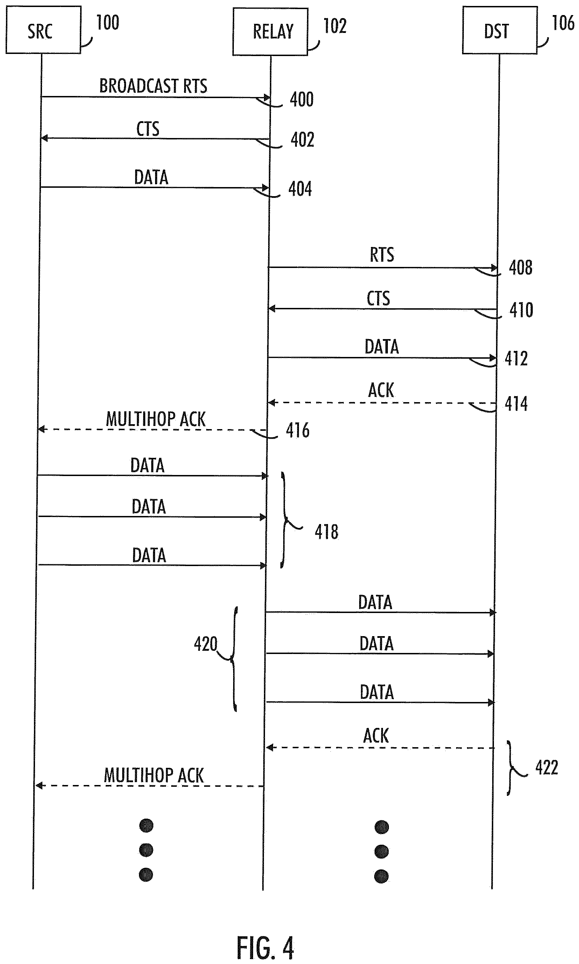

Figure 4 is signalling chart illustrating an embodiment. The chart illustrates signalling between the first node (source) 100, a relay node 102 and the target node (receiver or destination) 106.

In an embodiment, link negotiation for a multihop link is done using RTS/CTS handshake. The first node 100 transmits an initial RTS message 400 as a broadcast to the network. The message may be denoted as a broadcast RTS. Nodes that are capable to transmit to the target node with direct link negotiation (a point-to-point manner), such as the relay node 102, may respond to the broadcast RTS with CTS 402. In an embodiment, multiple nodes may respond. Therefore, the CTS reception window on the given frequency may be divided to time slots. Alternative method to avoid collisions is to send the CTS messages in different frequencies.

The first node 100 is configured to choose a relay node based on the received CTS messages. In an embodiment, the first node selects as the relay node the node which response was received first. The selection may be done also based on some other criterion.

After the relay node has been selected, the first node starts data transmission towards the relay node. In an embodiment, the data is transmitted using automatic repeat request, ARQ, protocol. The protocol starts by the first node sending the first data fragment 404 to the relay node. The relay node 102 receives the first fragment. Then the relay node starts to negotiate a link with the target node 106. This may be performed as an RTS/CTS negotiation 408, 410 as in normal point-to-point communication. After the link is negotiated, the relay node 102 transmits the first data fragment 412 to the target node 106. The target node is then configured to transmit an ACK packet 414 to the relay node. When relay node receives the ACK packet, it is relayed 416 to the first node. After the first ACK packet is received, the multihop link may be considered successfully open.

The data transmission then continues by the first node transmitting data fragments 418 to the relay node, the relay node transmitting the data fragments 420 to the relay node and the acknowledgements 422. This is repeated as long as there is data to transmit.

In an embodiment, selection of the frequency for the broadcast RTS transmission is similar to the direct link RTS frequency selection method. In an embodiment, the first node is configured to find a frequency that is free on as many as possible receiving nodes. If there are multiple suitable frequencies, they are ranked from best to worst using the number of nodes that the frequency is free on, block signal levels and FM reception signal quality.

If the first node gets no responses for a broadcast RTS transmitted on the frequency that was ranked best, the second-best frequency is tried and so on.

As mentioned, the first node may indicate in the broadcast RTS the frequency to use in the response CTS. In an embodiment, the responses of different nodes may be separated in time, i.e., the frequency may be divided into different time slots. The responding nodes may transmit the CTS at different times.

In general, a node may keep track of the best potential transmission parameters and maintain a history of used transmission parameters. Potential transmission parameters are calculated from the signal quality of all received packets.

When a potential relay node receives a broadcast RTS it calculates data reception parameters for the first node - relay link based on the requested transmission parameters. The relay node may also calculate transmission parameters for the relay node - target node link based on the history of used transmission parameters and potential transmission parameters. These two sets of transmission parameters may be added, and the value normalized from the worst transmission parameters to best.

Using this normalized value, the relay node picks the time slot on the indicated response frequency, the time slot being scaled from 2 to N where N is the number of time slots.

First time slot on the indicated response frequency is reserved for direct link response.

If the potential relay node keeps receiving broadcast RTS messages from the same first node it could mean that there are two relay nodes racing for the same time slot. In this situation there is a random chance to chance the time slot.

In an embodiment, the responses of different nodes may be separated in frequency. The first node may specify in the broadcast RTS message multiple possible frequencies for the CTS response. Selection method for these frequencies may be similar to methods described above in connection with point-to-point connections.

In an embodiment, the CTS message may be sent in wideband mode similar to the broadcast RTS. For these CTS messages the first node does not need to know the frequency prior to reception and frequency selection method is similar that what was described above regarding the frequency of the broadcast message.

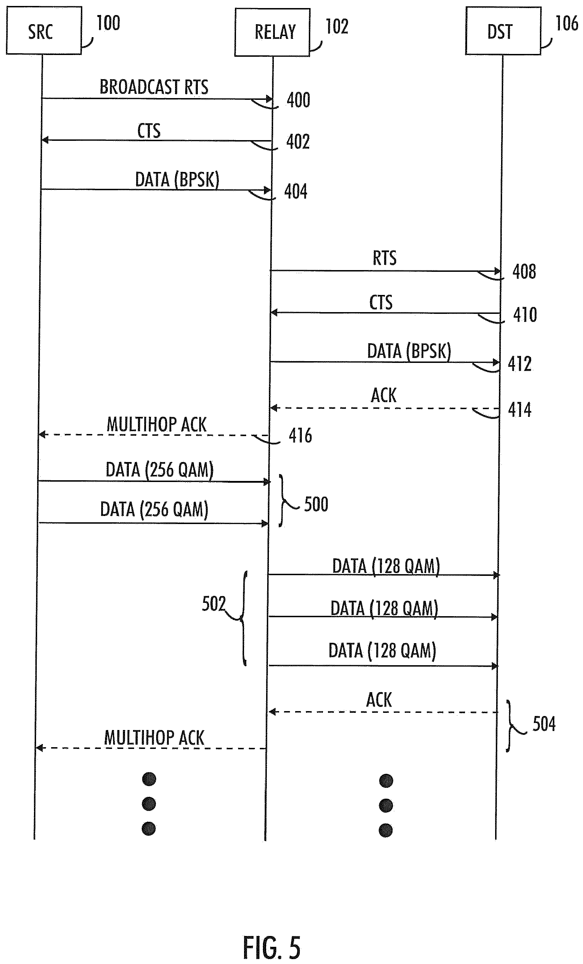

Figure 5 is signalling chart illustrating an embodiment. The chart illustrates signalling between the first node (source) 100, a relay node 102 and the target node (receiver or destination) 106. In this example, the data rates available for the connection between the first node and the relay node and the connection between the relay node and the target node are different.

The first steps 400-416 in Figure 5 are similar to the steps of Figure 4. Then the first node transmits data fragments 500 to the relay node, in this example utilising 256 QAM modulation. The relay node 102 transmits the data 502 to the target node 106. The data transmission then continues with the acknowledgements 504. This is repeated as long as there is data to transmit.

As in this example the relay node can utilise 128 QAM modulation in transmission the number of messages required to transmit the data received from the first node is larger than the number of messages received from the first node.

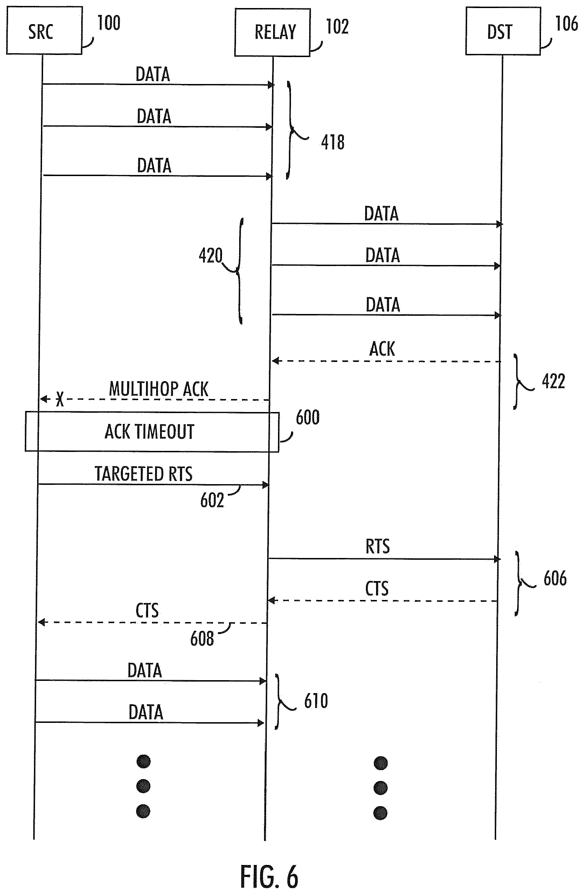

Figure 6 is signalling chart illustrating an embodiment. The chart illustrates signalling between the first node 100, a relay node 102 and the target node 106. In this example, link between the first node and the relay link needs to be rebuilt.

The data transmission is continuing by the first node transmitting data fragments 418 to the relay node, the relay node transmitting the data fragments 420 to the relay node and the acknowledgements 422.

However, in this example there is a failure 600 in the link between the first node 100, and the relay node 102. For example, acknowledgement timeout may occur. If data transmission fails, the first node can try to use the same relay node to reach the target node 106. The first node starts the link negotiation by sending a direct route request RTS 602 to the relay node. After this, the relay link negotiates link between the target node with an RTS/CTS message exchange and confirms the link to the first node with a CTS 608. The target node informs where to restart the transmission. The data transmission 610 may then continue.

A broken link between the relay node and the target node may be rebuilt in a similar manner. After an ACK timeout, the relay node may transmit an RTS to the target node, receive a CTS, relay it to the first node and the data transfer may continue.

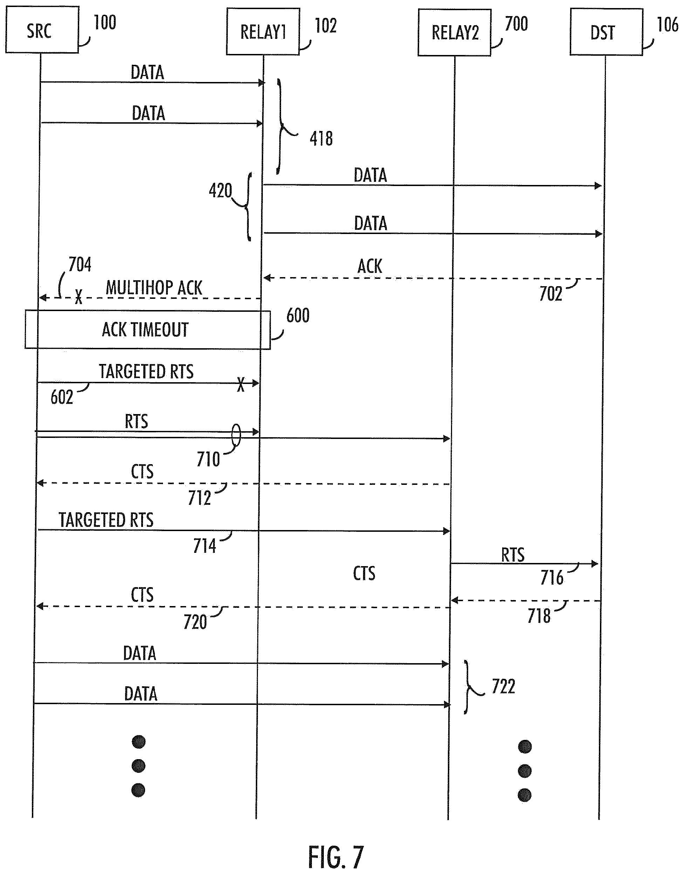

Figure 7 is signalling chart illustrating an embodiment. The chart illustrates signalling between the first node 100, a relay node 102, another relay node 700 and the target node 106. In this example, link between the first node 100 and the relay link 102 breaks and a link with another relay node 700 has to be negotiated.

The data transmission is continuing by the first node transmitting data fragments 418 to the relay node 102, the relay node transmitting the data fragments 420 to the relay node and the acknowledgements 702, 704.

Also in this example there is a failure 600 in the link between the first node 100 and the relay node 102. For example, acknowledgement timeout may occur. If data transmission fails, the first node can try to use the same relay node to reach the target node 106. The first node starts the link negotiation by sending a direct route request RTS 602 to the relay node. However, in this example the first node does not get a response form the relay node 102.

As a response in not received, the first node is configured to transmit a new broadcast RTS 710. This time another node 700 responds with a CTS 712. The first node transmits a confirmation RTS 714 to the new relay node 700 with a request to get a datagram offset from the target node in order to find out what data fragments need to be sent to the target node.

The new relay node 700 transmits a RTS 716 to the target node and receives as a response a CTS 718 with datagram offset. The new relay node forwards this information in a CTS 720 to the first node.

The data transmission 722 may then continue.

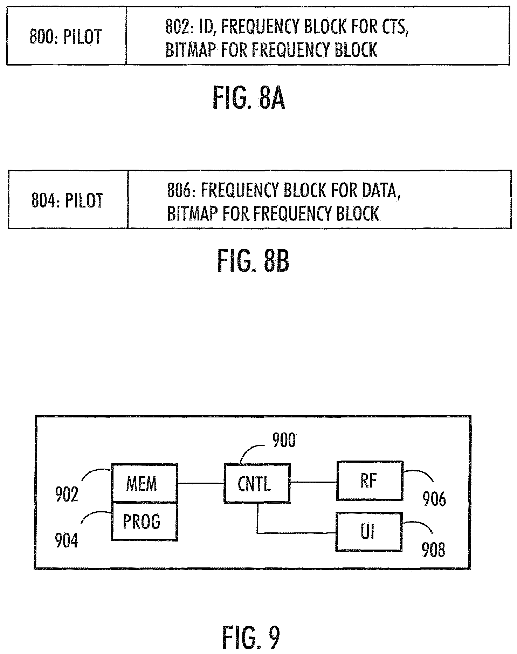

Figure 8A illustrates an embodiment of the RTS message. The RTS message may also carry a pilot sequence 800 that may be used to measure a signal strength, for example. The RTS message may further comprise information elements 802 such as an identifier of the transmitter of the RTS message, an indicator for the frequency block for CTS response and, optionally, a bitmap of preferred sub-bands for the frequency block. In another embodiment, the RTS message may comprise a bitmap of preferred sub-bands for the frequency block carrying the RTS message. The RTS message may further include an information element explicitly specifying a sub-band of the indicated frequency block that shall be used for transmitting the response to the RTS message (the CTS message). This information element may serve also as an indicator for the sub-band of the acknowledgment message related to a subsequent data transmission. The bitmap contained in the RTS message is not necessarily used for selecting a sub-band for the response to the RTS message. The RTS message may further carry an information element that indicates an amount of data transmission resources requested by the network node transmitting the RTS message. A recipient of the RTS message may use this information in the selection and allocation of a number of sub-bands for the data transmission.

Figure 8B illustrates an embodiment of the CTS message. The CTS message may also carry a pilot sequence 804. The CTS message may further comprise information elements 806 such as an indicator for the frequency block selected for the data transmission and an indicator for one or more sub-bands of the selected frequency block allocated for data transmission. The bitmap may be omitted from the CTS message.

Figure 9 illustrates an example embodiment. The figure illustrates a simplified example of an apparatus applying example embodiments of the invention.

It should be understood that the apparatus is depicted herein as an example illustrating some embodiments. It is apparent to a person skilled in the art that the apparatus may also comprise other functions and/or structures and not all described functions and structures are required. Although the apparatus has been depicted as one entity, different modules and memory may be implemented in one or more physical or logical entities.

The apparatus may be a radio communication apparatus implemented as a portable device, e.g. a computer (PC), a laptop, a tabloid computer, a portable radio phone, a mobile radio platform (installed to a vehicle such as a truck or a ship), or any other apparatus provided with radio communication capability. In some embodiments, the apparatus is the vehicle equipped with the radio communication capability. In other embodiments, the apparatus is a fixed station, e.g. a base station. In further embodiments, the apparatus is comprised in any one of the above-mentioned apparatuses, e.g. the apparatus may comprise a circuitry, e.g. a chipset, a processor, a micro controller, or a combination of such circuitries in the apparatus.

The apparatus 900 of the example includes a control circuitry 900 configured to control at least part of the operation of the apparatus.

The apparatus may comprise a memory 902 for storing data. Furthermore, the memory may store software 904 executable by the control circuitry 900. The memory may be integrated in the control circuitry. The memory 902 may also store communication parameters and other information needed for the radio communications. For example, the memory may store a list of preferred sub-bands, received signal strength values, and lowest noise level values of frequency blocks for each network node the apparatus has detected or has capability of communicating with. The memory 902 may serve as a buffer for data packets to be transmitted.

The apparatus further comprises one or more interface circuitries 906 configured to connect the apparatus to other devices. The interface 906 may provide a wireless connection. The interface may provide a connection to other nodes of a communication system. The interface may comprise a transmitter or a transceiver with a power amplifier, for example. The interface may comprise standard well-known components such as amplifier, filter, frequency-converter, analog-to-digital (A/D) and digital-to-analog (D/A) converters, (de)modulator, and encoder/decoder circuitries and one or more antennas. In an embodiment, the apparatus may further comprise a user interface 908 enabling interaction with the user. The user interface may comprise a display, a keypad or a keyboard, a loudspeaker, a smartcard and/or fingerprint reader, etc.

In an example embodiment, the software 904 may comprise a computer program comprising program code means adapted to cause the control circuitry 900 of the apparatus to control the apparatus to realise at least some of the example embodiments described above.

As used in this application, the term 'circuitry' refers to all of the following: (a) hardware-only circuit implementations, such as implementations in only analog and/or digital circuitry, and (b) to combinations of circuits and software (and/or firmware), such as (as applicable): (i) a combination of processor(s) or (ii) portions of processor(s)/software including digital signal processor(s), software, and memory(ies) that work together to cause an apparatus to perform various functions, and (c) to circuits, such as a microprocessor(s) or a portion of a microprocessor(s), that require software or firmware for operation, even if the software or firmware is not physically present.

This definition of 'circuitry' applies to all uses of this term in this application. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular element, a baseband integrated circuit or applications processor integrated circuit for a mobile phone or a similar integrated circuit in server, a cellular network device, or other network device.

In an embodiment, the apparatus comprises means for realising at least some of the example embodiments described above.

In an embodiment, the apparatus carrying out the embodiments of the invention in the communication apparatus comprises at least one processor and at least one memory including a computer program code, wherein the at least one memory and the computer program code are configured, with the at least one processor, to cause the apparatus to carry out the steps of any one of the processes of Figures 2 to 10. Accordingly, the at least one processor, the memory, and the computer program code form processing means for carrying out embodiments of the present invention in the communication apparatus.

The processes or methods described in the Figures may also be carried out in the form of a computer process defined by a computer program. The computer program may be in source code form, object code form, or in some intermediate form, and it may be stored in some sort of carrier, which may be any entity or device capable of carrying the program. Such carriers may include transitory or non-transitory media such as a record medium, computer memory, read-only memory, electrical carrier signal, telecommunications signal, and software distribution package, for example. Depending on the processing power needed, the computer program may be executed in a single electronic digital processing unit or it may be distributed amongst a number of processing units.

The present invention is applicable to radio communication systems defined above but also to other suitable telecommunication systems. The protocols used, the specifications of mobile telecommunication systems, their network elements and subscriber terminals, develop rapidly. Such development may require extra changes to the described embodiments. Therefore, all words and expressions should be interpreted broadly and they are intended to illustrate, not to restrict, the embodiment. It will be obvious to a person skilled in the art that, as technology advances, the inventive concept can be implemented in various ways. The invention and its embodiments are not limited to the examples described above but may vary within the scope of the claims.

## Claims

1. A method for link negotiation procedure for nodes of a wireless network, the method comprising in a first node (100) of a wireless network:
determining that a target node of the wireless network is not reachable with a point-to-point transmission;
transmitting broadcast transmission requesting a relay connection to the target node;
receiving on a given frequency a response from a second node of the wireless network, the response indicating capability to relay transmissions to the target node;
transmitting data to the second node, the being data intended to the target node;
receiving an acknowledgement from the second node that the data has been successfully transmitted to the target node.

2. The method of claim 1, wherein the broadcast transmission comprises information on the given frequency or frequencies to send a response to the broadcast transmission.

3. The method of claim 2, further comprising
receiving a response from more than one second nodes in the of the wireless network, the responses indicating capability to relay transmissions to the target node;
select one of the second nodes as the node to which data intended to the target node is transmitted.

4. The method of claim 3, wherein
responses from more than one second nodes are separated in time on the same frequency.

5. The method of claim 3, further comprising
responses from more than one second nodes are received on different frequencies.

6. The method of claim 4, further comprising
select as the node to which data intended to the target node is transmitted the node which response was received first.

7. The method of claim 1, further comprising:
rejecting a response from a node with which data transmission has been unsuccessful prior transmitting the broadcast request.

8. An apparatus in a wireless communication system, the apparatus comprising
means for determining that a target node of the wireless network is not reachable with a point-to-point transmission;
means for transmitting broadcast transmission requesting a relay connection to the target node;
means for receiving on a given frequency a response from a second node of the wireless network, the response indicating capability to relay transmissions to the target node;
means for transmitting data to the second node, the being data intended to the target node;
means for receiving an acknowledgement from the second node that the data has been successfully transmitted to the target node.

9. The apparatus of claim 8, wherein the broadcast transmission comprises information on the given frequency or frequencies to send a response to the broadcast transmission.

10. The apparatus of claim 8, further comprising
means for receiving a response from more than one second nodes in the of the wireless network, the responses indicating capability to relay transmissions to the target node;
means for selecting one of the second nodes as the node to which data intended to the target node is transmitted.

11. The apparatus of claim 10, wherein
responses from more than one second nodes are separated in time on the same frequency.

12. The apparatus of claim 10, wherein
responses from more than one second nodes are received on different frequencies.

13. The apparatus of claim 11, further comprising
means for selecting as the node to which data intended to the target node is transmitted the node which response was received first.

14. The apparatus of claim 8, further comprising:
means for rejecting a response from a node with which data transmission has been unsuccessful prior transmitting the broadcast request.

15. A computer program product embodied on a distribution medium readable by a computer and comprising program instructions which, when loaded into an apparatus, execute the method according to any preceding claim 1 to 7.
